# EUROPEAN PATENT APPLICATION

(11) **EP 4 063 709 A1**
(43) Date of publication of application: **28.09.2022**
(21) Application number: 21163995.0
(22) Date of filing: 22.03.2021
(51) Int. Cl.: F16M 11/10, G01N 35/00

(54) **LABORATORY SYSTEM AND CORRESPONDING METHOD OF OPERATION**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Patentanwälte Ruff, Wilhelm, Beier, Dauster & Partner mbB

(57) **Abstract**

Laboratory system (100), comprising:
- laboratory sample container holders (1) being adapted to receive laboratory sample containers (2) containing laboratory samples (3),
- a digital camera (4) having an optics (5),
- wherein the optics (5) has an optical axis (OA), and
- wherein the digital camera (4) is adapted to generate digital image data of the laboratory sample containers (2) received in the laboratory sample container holders (1), when the laboratory sample container holders (1) are positioned at a predetermined imaging position (IP),

- a camera holder (6) being adapted to hold the digital camera (4), and
- a control unit (10) being adapted to determine properties of the laboratory sample containers (2) and/or properties of the laboratory samples (3) contained in the laboratory sample containers (2) based on the digital image data,
- wherein the camera holder (6) rotatably holds the digital camera (4), such that the digital camera (4) can rotate around an axis of rotation (AR), wherein the camera holder (6) is geometrically formed such that the axis of rotation (AR) is identical to the optical axis (OA) of the optics (5), when the digital camera (4) is held by the camera holder (6).

## Description

WO 03/060484 A1 discloses a laboratory automation system for processing laboratory samples contained in laboratory sample containers, the system comprising a camera used to determine properties of the laboratory sample containers and properties of the laboratory samples.

It is the object of the invention to provide for a laboratory system and corresponding method of operation being highly reliable and easy to maintain.

The laboratory system comprises conventional laboratory sample container holders. A respective laboratory sample container holder receives corresponding laboratory sample containers, e.g. five laboratory sample containers. Reference insofar is made to the relevant technical literature. The laboratory sample containers typically contain laboratory samples, e.g. in form of body fluids such as blood, urine, etc.

The laboratory system further comprises a conventional digital camera having a conventional optics. The optics may comprise a lens. The optics has an optical axis. The optical axis may be defined as the straight line passing through the geometrical centre of the lens and joining the two centres of curvature of the lens surfaces. The optical axis of the lens may be called its principal axis. The path of a light ray along this optical axis is perpendicular to the lens surfaces and, as such, will be unchanged. All other ray paths passing through the lens and its optical centre (the geometrical centre of a thin lens) are called secondary axes. The term optical axis should not be confused with optic axis, a term used in crystallography. The digital camera is adapted to generate digital image data of the laboratory sample containers received in a respective laboratory sample container holder and of the contained laboratory samples when a respective laboratory sample container holder is positioned at a predetermined imaging position. A respective laboratory sample container holder is placed at the predetermined imaging position such that the digital camera may take a digital image of the laboratory sample container holder placed at the imaging position.

The laboratory system further comprises a camera holder being adapted to hold/fix the digital camera at an intended position.

The laboratory system further comprises a control unit, e.g. in form of a microprocessor, being adapted to determine properties of the laboratory sample containers and/or properties of the laboratory samples contained in the laboratory sample containers based on the digital image data, e.g. by means of digital image processing.

The camera holder is embodied such that it holds/fixes the digital camera, such that the digital camera can rotate around an axis of rotation being geometrically defined by the camera holder. The camera holder is formed such that the axis of rotation is identical to the optical axis of the optics, when the digital camera is held by the camera holder. Thus, no translational displacement is caused by rotating the camera during an adjustment operation. Consequently, the camera may first be correctly adjusted in a translational direction and afterwards may be correctly adjusted in a rotational direction.

The holder provides or enables a rotation of the digital camera at least in an angular range needed to rotationally adjust the digital camera. The angular range may e.g. extend between -20 ° and 20 °.

According to an embodiment the camera holder comprises a frame, wherein the frame may be displaceable translationally in a vertical and/or in a horizontal direction relative to the predetermined imaging position of the laboratory sample container holder. The camera holder further comprises a holding element. The holding element releasably holds/fixes the digital camera. The holding element is rotatably supported in the frame, such that the axis of rotation is identical to the optical axis of the optics.

According to an embodiment the camera holder comprises a fixing element, wherein the fixing element when actuated fixes the holding element to the frame. The fixing element when released enables a rotation of the holding element in the frame.

According to an embodiment the fixing element comprises a screw. In other words, the fixing element may form a screw fitting.

According to an embodiment the camera holder is displaceable in a vertical and/or in a horizontal direction relative to the predetermined imaging position of the laboratory sample container holder. For that purpose, the camera holder may comprise one or more linear bearings.

According to an embodiment the properties of the laboratory sample containers are related to a laboratory sample container type, and/or geometrical properties of the laboratory sample containers, and/or information/content regarding barcodes assigned to the laboratory sample containers.

According to an embodiment the properties of the laboratory samples are related to liquid levels of the laboratory samples contained in the laboratory sample containers, and/or a colour of the laboratory samples contained in the laboratory sample containers, and/or a state of the laboratory samples contained in the laboratory sample containers, e.g. a mixed state, a centrifuged state, etc.

According to an embodiment the holding element comprises fixing bolts, e.g. two fixing bolts. The digital camera comprises a housing having openings or holes, wherein the openings correspond to the fixing bolts, such that the fixing bolts are insertable into the openings to removably and mechanically fix the digital camera to the holding element.

According to an embodiment the frame comprises a, in particular circular extending, nut or groove. The holding element comprises at least one guidance bolt, in particular two guidance bolts, corresponding to the nut or groove, such that the guidance bolt interacting with the nut or groove axially fixes the holding element with respect to the frame, wherein the holding element is still rotatable guided with respect to the frame.

According to an embodiment the at least one guidance bolt is embodied as a screw, wherein the holding element comprises a holding element body having a screw thread corresponding to the screw. The frame may comprise openings such that the screw may be inserted or screwed into the screw thread through theses openings of the frame.

The method of operating a laboratory system comprises the steps: adjusting the camera holder translationally in the vertical and/or in the horizontal direction relative to the predetermined imaging position of the laboratory sample container holder, such that the optical axis is in an intended vertical and/or horizontal position relative to the imaging position, releasing the fixing element to enable a rotation of the holding element relative to the frame, rotating the holding element, such that the digital camera is correctly rotationally aligned, and finally actuating the fixing element, such that a rotation of the holding element relative to the frame is prevented.

The invention will now be described in detail with respect to the attached drawings, wherein:
- Fig. 1: schematically shows a perspective view on a laboratory system comprising a digital camera and an inventive camera holder,
- Fig. 2: shows a perspective view on the inventive camera holder without a held digital camera in more detail,
- Fig. 3: shows a perspective view on a holding element of the camera holder,
- Fig. 4: shows a perspective view on a frame of the camera holder, and
- Fig. 5: shows a perspective view on a housing of the digital camera.

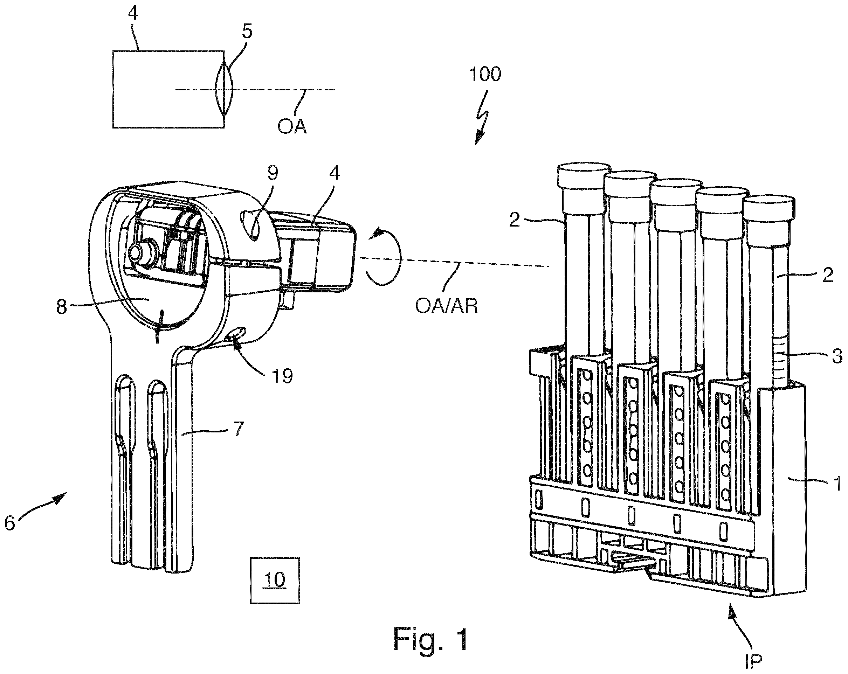

Fig. 1 schematically shows a perspective view on a laboratory system 100.

The laboratory system 100 comprises a laboratory sample container holder 1 being adapted to receive five laboratory sample containers 2 containing laboratory samples 3, e.g. blood samples. For the sake of description only a single laboratory sample container holder 1 located at predetermined imaging position IP is depicted. Self-evidently, the laboratory system 100 comprises a plurality of laboratory sample container holders 1, e.g. several hundreds of laboratory sample container holders 1.

The laboratory system 100 further comprises a digital camera 4 having an optics 5 in form of a conventional lens. The optics or lens 5 has an optical axis OA. The digital camera 4 is adapted to generate digital image data of the laboratory sample containers 2 received in the laboratory sample container holder 1, when the laboratory sample container holder 1 is positioned at the imaging position IP. The digital camera 4 is held by means of a camera holder 6.

The laboratory system 100 further comprises a control unit 10 being adapted to determine properties of the laboratory sample containers 2 and/or properties of the laboratory samples 3 contained in the laboratory sample containers 2 based on the digital image data.

The properties of the laboratory sample containers 2 may relate to a laboratory sample container type, and/or geometrical properties of the laboratory sample containers 2, and/or information regarding barcodes assigned to the laboratory sample containers 2.

The properties of the laboratory samples 3 may e.g. relate to liquid levels of the laboratory samples 3 contained in the laboratory sample containers 2, and/or a colour of the laboratory samples 3 contained in the laboratory sample containers 2, and/or a state of the laboratory samples 3 contained in the laboratory sample containers 2.

According to the invention the camera holder 6 holds the digital camera 4, such that the digital camera 4 can rotate around an axis of rotation AR. The camera holder 6 is geometrically formed such that the axis of rotation AR is identical to the optical axis OA of the optics or lens 5, when the digital camera 4 is held by the camera holder 6.

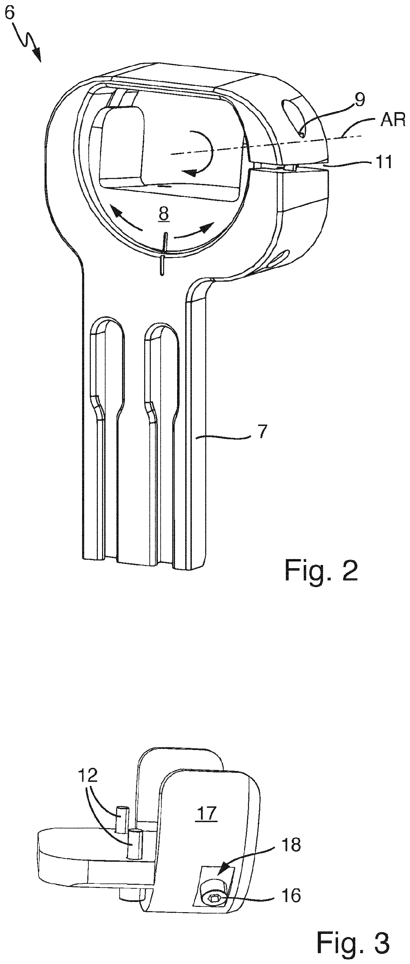

Also referring to fig. 2, the camera holder 6 comprises a frame 7, and a holding element 8, wherein the holding element 8 holds the digital camera 4 and wherein the holding element 8 is rotatably supported in the frame 7.

The camera holder 6 comprises a fixing element in form of a screw 9, wherein the fixing element or screw 9 when actuated fixes the holding element 8 to the frame 7 and the fixing element or screw 9 when released enables a rotation of the holding element 8 in the frame 7. The screw 9 when actuated or closed narrows a gap 11 in the frame 7, such that the holding element 8 is mechanically fixed to or clamped in the frame 7.

The camera holder 6 is displaceable in a vertical and/or in a horizontal direction relative to the predetermined imaging position IP of the laboratory sample container holder 1.

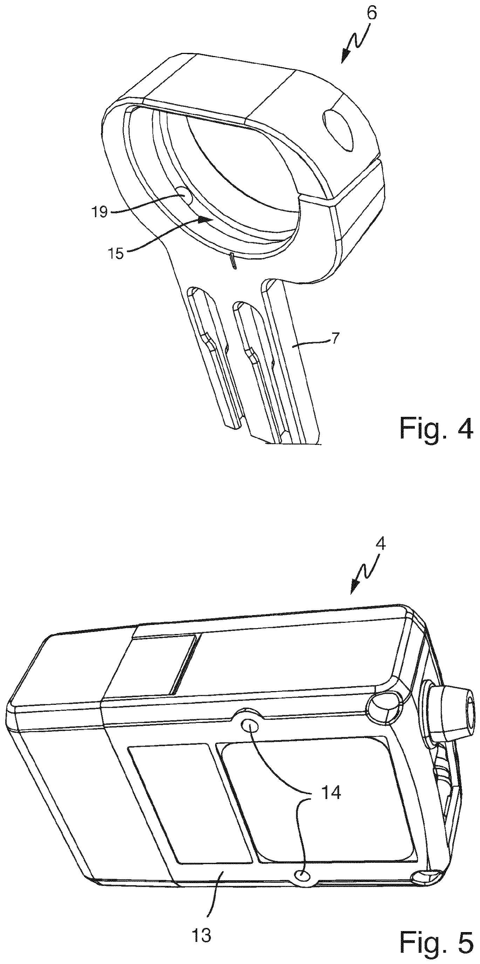

Referring to fig. 3, the holding element 8 comprises fixing bolts 12. Referring to fig. 5, the digital camera 4 comprises a housing 13 having openings 14, wherein the openings 14 correspond to the fixing bolts 12, such that the fixing bolts 12 are insertable into the openings 14 to removably fix the digital camera 4 to the holding element 8.

Referring to fig. 4, the frame 7 comprises a circular nut or groove 15. Referring to fig. 3, the holding element 8 comprises two guidance bolts 16 (one of the guiding bolts not visible) corresponding to the nut 15, such that the guidance bolts 16 interacting with or placed in the nut 15 axially fix the holding element 8 with respect to the frame 7.

The bolts 16 are embodied as screws, wherein the holding element 8 comprises a holding element body 17 having a screw thread 18 corresponding to the screw 16. To insert the screws 16, the frame 7 has openings 19.

In order to adjust the camera holder 6, the camera holder 6 is firstly adjusted in the vertical and/or in the horizontal direction relative to the predetermined imaging position IP of the laboratory sample container holder 1, such that the optical axis OA is in an intended vertical and/or horizontal position relative to the imaging position IP.

After that, the fixing element 9 is released and the holding element 8 is rotated until the digital camera 4 is correctly rotationally aligned.

After that, the fixing element 9 is actuated to fix the rotational alignment.

## Claims

1. Laboratory system (100), comprising:
- laboratory sample container holders (1) being adapted to receive laboratory sample containers (2) containing laboratory samples (3),
- a digital camera (4) having an optics (5),
- wherein the optics (5) has an optical axis (OA), and
- wherein the digital camera (4) is adapted to generate digital image data of the laboratory sample containers (2) received in the laboratory sample container holders (1), when the laboratory sample container holders (1) are positioned at a predetermined imaging position (IP),
- a camera holder (6) being adapted to hold the digital camera (4), and
- a control unit (10) being adapted to determine properties of the laboratory sample containers (2) and/or properties of the laboratory samples (3) contained in the laboratory sample containers (2) based on the digital image data,
**characterized in that**
- the camera holder (6) rotatably holds the digital camera (4), such that the digital camera (4) can rotate around an axis of rotation (AR), wherein the camera holder (6) is geometrically formed such that the axis of rotation (AR) is identical to the optical axis (OA) of the optics (5), when the digital camera (4) is held by the camera holder (6).

2. Laboratory system (100) according to claim 1, **characterized in that**
- the camera holder (6) comprises
- a frame (7), and
- a holding element (8), wherein the holding element (8) holds the digital camera (4) and wherein the holding element (8) is rotatably supported in the frame (7).

3. Laboratory system (100) according to claim 2, **characterized in that**
- the camera holder (6) comprises a fixing element (9), wherein the fixing element (9) when actuated fixes the holding element (8) to the frame (7) and the fixing element (9) when released enables a rotation of the holding element (8) in the frame (7).

4. Laboratory system (100) according to claim 3, **characterized in that**
- the fixing element comprises a screw (9).

5. Laboratory system (100) according to one of the preceding claims, **characterized in that**
- the camera holder (6) is displaceable in a vertical and/or in a horizontal direction relative to the predetermined imaging position (IP) of the laboratory sample container holder (1).

6. Laboratory system (100) according to one of the preceding claims, **characterized in that**
- the properties of the laboratory sample containers (2) are a laboratory sample container type, and/or geometrical properties of the laboratory sample containers (2), and/or information regarding barcodes assigned to the laboratory sample containers (2).

7. Laboratory system (100) according to one of the preceding claims, **characterized in that**
- the properties of the laboratory samples are liquid levels of the laboratory samples (3) contained in the laboratory sample containers (2), and/or a colour of the laboratory samples (3) contained in the laboratory sample containers (2), and/or a state of the laboratory samples (3) contained in the laboratory sample containers (2).

8. Laboratory system (100) according to one of claims 2 to 7, **characterized in that**
- the holding element (8) comprises fixing bolts (12), and
- the digital camera (4) comprises a housing (13) having openings (14), wherein the openings (14) correspond to the fixing bolts (12), such that the fixing bolts (12) are insertable into the openings (14) to removably fix the digital camera (4) to the holding element (8).

9. Laboratory system (100) according to one of claims 2 to 8, **characterized in that**
- the frame (7) comprises a nut (15), and
- the holding element (8) comprises at least one guidance bolt (16) corresponding to the nut (15), such that the at least one guidance bolt (16) interacting with the nut (15) axially fixes the holding element (8) with respect to the frame (7).

10. Laboratory system (100) according to claim 9, **characterized in that**
- the at least one guidance bolt (16) is embodied as a screw, wherein the holding element (8) comprises a holding element body (17) having a screw thread (18) corresponding to the screw (16).

11. Method of operating a laboratory system (100) according to one of claims 5 to 10, comprising the steps:
- adjusting the camera holder (6) in the vertical and/or in the horizontal direction relative to the predetermined imaging position (IP) of the laboratory sample container holder (1), such that the optical axis (OA) is in an intended vertical and/or horizontal position relative to the imaging position (IP),
- releasing the fixing element (9),
- rotating the holding element (8), such that the digital camera (4) is correctly rotationally aligned, and
- actuating the fixing element (9).
